# EUROPEAN PATENT APPLICATION

(11) **EP 4 664 626 A1**
(43) Date of publication of application: **17.12.2025**
(21) Application number: 24788934.8
(22) Date of filing: 28.03.2024
(51) Int. Cl.: H01M 50/20, H01M 50/204, H01M 10/655, H01M 50/289

(54) **BATTERY PACK**

(30) Priority: 13.04.2023 KR 20230048545
(71) Applicant: LG Energy Solution, Ltd., Seoul 07335 (KR)
(72) Inventor: CHOI, Jong Hwa, Daejeon 34122 (KR); LEE, Hyoung Suk, Daejeon 34122 (KR); LEE, Jae Hyun, Daejeon 34122 (KR); JANG, Byung Do, Daejeon 34122 (KR)
(74) Representative: Plasseraud IP
(86) International application number: PCT/KR2024/003934
(87) International publication number: WO 2024/214991

(57) **Abstract**

A battery pack having a pack case including a lower case and an upper case that define an inner space, a plurality of battery cells in the inner space, a separation sheet between a bottom of the pack case and the plurality of battery cells, and a thermally conductive resin layer between the separation sheet and the plurality of battery cells, in which the separation sheet is coupled to the thermally conductive resin layer, and a first adhesive strength per unit area between the separation sheet and the thermally conductive resin layer is lower than a second adhesive strength per unit area between the pack case and the thermally conductive resin layer.

## Description

### [Technical Field]

The present invention relates to a battery pack and, more specifically, to a battery pack in which a desired battery cell is easily removable from a pack case and that is greatly improved in terms of convenience of maintenance.

This application claims the benefit of priority based on Korean Patent Application No. 10-2023-0048545, filed on April 13, 2023, and the entire content of the Korean patent application is incorporated herein by reference.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

Recently, the demand for large-capacity battery packs applicable to electric vehicles, etc. is increasing. In a large-capacity battery pack mounted in a vehicle, a thermal event may occur due to an increase in temperature in some battery cells during electrical charging/discharging of a plurality of battery cells, and follow-up measures such as replacing a defective battery cell with another should be performed in some cases. Therefore, a method of facilitating follow-up measures is needed.

### [Disclosure]

### [Technical Problem]

The present invention is directed to providing a battery pack in which a desired battery cell is easily removable from a pack case, thus significantly improving the convenience of maintenance.

### [Technical Solution]

An aspect of the present invention provides a battery pack including: a pack case including a lower case and an upper case, the lower case and the upper case defining an inner space, a plurality of battery cells in the inner space, a separation sheet between a bottom of the pack case and the plurality of battery cells, and a thermally conductive resin layer between the separation sheet and the plurality of battery cells, in which the separation sheet is coupled to the thermally conductive resin layer, and a first adhesive strength per unit area between the separation sheet and the thermally conductive resin layer is lower than a second adhesive strength per unit area between the pack case and the thermally conductive resin layer.

In some embodiments, the first adhesive strength per unit area may be in a range of about 10% to about 70% of the second adhesive strength per unit area.

In some embodiments, the thermally conductive resin layer may be provided only between the separation sheet and the plurality of battery cells. In some embodiments, the thermally conductive resin layer may not be in contact with the pack case.

In some embodiments, the separation sheet may have adhesive strength with respect to the pack case.

In some embodiments, the plurality of battery cells may include at least one battery cell stack, a bottom surface of the at least one battery cell stack facing the bottom of the pack case may face the separation sheet, and a width of the separation sheet may be less than a width of the bottom surface of the at least one battery cell stack. In some embodiments, the separation sheet may extend along a side surface of the at least one battery cell stack.

In some embodiments, the separation sheet may include a perforated line crossing the separation sheet in a width direction of the separation sheet, and the perforated line may pass between the at least one battery cell stack and the bottom of the pack case.

In some embodiments, the thermally conductive resin layer may be provided only between the bottom surface of the at least one battery cell stack and the separation sheet. In some embodiments, a first surface of the thermally conductive resin layer may be in contact with the separation sheet, and a second surface of the thermally conductive resin layer may be in contact with the bottom surface of the at least one battery cell stack.

In some embodiments, the plurality of battery cells may include at least one battery cell stack, the separation sheet may include a first separation sheet and a second separation sheet, the first separation sheet may be positioned at a first end of the at least one battery cell stack and between the at least one battery cell stack and the bottom of the pack case, and the second separation sheet may be spaced apart from the first separation sheet, and may be positioned at a second end of the at least one battery cell stack and between the at least one battery cell stack and the bottom of the pack case.

In some embodiments, the at least one battery cell stack may directly face the bottom of the pack case between the first separation sheet and the second separation sheet.

Another aspect of the present invention provides a battery pack in a vertical coordinate system defined by a first direction, a second direction, and a third directions that are perpendicular to one another, the battery pack including: a plurality of battery cells stacked in the first direction, a pack case including a lower case, an upper case, and an inner space configured to accommodate the plurality of battery cells, a separation sheet between a bottom of the pack case and the plurality of battery cells, and a thermally conductive resin layer between the separation sheet and the plurality of battery cells, in which the separation sheet is configured to be separated from the thermally conductive resin layer when a shear force is applied to the thermally conductive resin layer.

In some embodiments, the thermally conductive resin layer may not be in contact with the pack case.

In some embodiments, the lower case may include a side wall and a cross-beam extending from the side wall across the lower case, and the separation sheet may be configured to be attachable to and detachable from at least one of the side wall and the cross-beam.

### [Advantageous Effects]

In a battery pack of the present invention, a desired battery cell can be easily removed from a pack case, thereby greatly improving the convenience of maintenance.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a perspective view of a battery pack according to example embodiments of the present invention.
FIG. 2 is a perspective view of some components of a battery pack according to example embodiments of the present invention.
FIG. 3 is an enlarged perspective view illustrating a state in which battery cells are mounted in a lower case according to an embodiment of the present invention.
FIG. 4 is an exploded perspective view illustrating a state in which a bottom surface and a pair of side surfaces of a first battery cell stack are surrounded by a separation sheet.
FIG. 5 is a perspective view illustrating the state in which the bottom surface and the pair of side surfaces of the first battery cell stack are surrounded by the separation sheet.
FIG. 6 is a side view illustrating the state in which the bottom surface and the pair of side surfaces of the first battery cell stack are surrounded by the separation sheet.
FIGS. 7 to 11 are conceptual views illustrating a method of removing a certain battery cell stack from a battery pack according to embodiments of the present invention.
FIG. 12 is an exploded perspective view illustrating a state in which a part of a bottom surface of and a pair of side surfaces of a first battery cell stack are surrounded by a pair of separation sheets according to another embodiment of the present invention.
FIG. 13 is a side view illustrating the state in which the bottom surface and the pair of side surfaces of the first battery cell stack are surrounded by the pair of separation sheets.
FIGS. 14 to 16 are conceptual views illustrating a method of removing a certain battery cell stack from a battery pack according to other embodiments of the present invention.
FIG. 17 is an exploded perspective view illustrating a state in which the bottom surface and the pair of side surfaces of the first battery cell stack are surrounded by a separation sheet according to another embodiment of the present invention.
FIGS. 18 and 19 are conceptual views illustrating a method of removing a certain battery cell stack from a battery pack according to another embodiment of the present invention.

### [Best Mode]

Hereinafter, embodiments of the concept of the present invention will be described in detail with reference to the accompanying drawings. However, embodiments of the concept of the present invention may be embodied in many different forms and thus the scope of the present invention should not be interpreted as being limited by the embodiments described below. It should be understood that the embodiments of the concept of the present invention are provided to more completely describe the concept of the present invention to those of ordinary knowledge in the art. The same reference numerals denote the same elements throughout the specification. Furthermore, in the drawings, various elements and areas are shown schematically. Therefore, the concept of the present invention is not limited by the relative sizes of elements or the intervals therebetween shown in the accompanying drawings.

Terms such as first and second may be used to describe various components but the components are not limited by the terms. These terms are used only for the purpose of distinguishing one component from another. For example, a first component may be referred to as a second component without departing from the scope of the present invention, and similarly, the second component may be referred to as the first component.

The terms used in this application are only used to describe certain embodiments and are not intended to limit the concept of the present invention. As used herein, the singular expressions are intended to include plural forms as well, unless the context clearly dictates otherwise. It should be understood that the terms "comprise" and/or "comprising", when used herein, specify the presence of stated features, integers, steps, operations, elements, components, or a combination thereof, but do not preclude the presence or addition of one or more features, integers, steps, operations, elements, components, or a combination thereof.

Unless otherwise defined, all terms (including technical and scientific terms) used herein have the same meaning as commonly understood by one of ordinary skill in the technical field to which the concept of the present invention pertains. In addition, terms commonly used and defined in dictionaries should be interpreted as having a meaning consistent with the context of the related art and should not be interpreted in an overly formal sense unless explicitly defined herein.

When an embodiment may be implemented differently, certain operations may be performed in an order different from that described below. For example, two operations described consecutively may be performed substantially concurrently or in an order reverse to that described below.

It will be expected that the shapes of components illustrated in the accompanying drawings may vary, for example, according to manufacturing technology and/or tolerances. Therefore, embodiments of the present invention should not be construed as being limited by a specific shape of each region illustrated in the present specification but should be understood to cover, for example, a change in the shape of each region, caused during a manufacture process. As used herein, the term "and/or" includes any and all combinations of one or more of the associated listed items. In addition, the term "substrate" used in this specification may refer to a substrate itself, or a stacked structure including a substrate and a predetermined layer or film formed on its surface. In addition, the expression "surface of the substrate" used herein should be understood to mean an exposed surface of the substrate or an outer surface of a layer or film formed on the substrate.

### (First Embodiment)

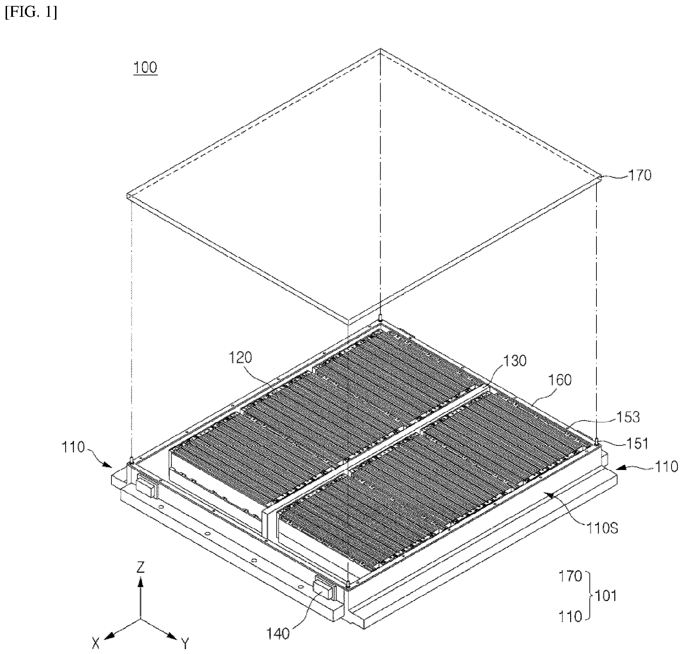

FIG. 1 is a perspective view of a battery pack 100 according to example embodiments of the present invention.

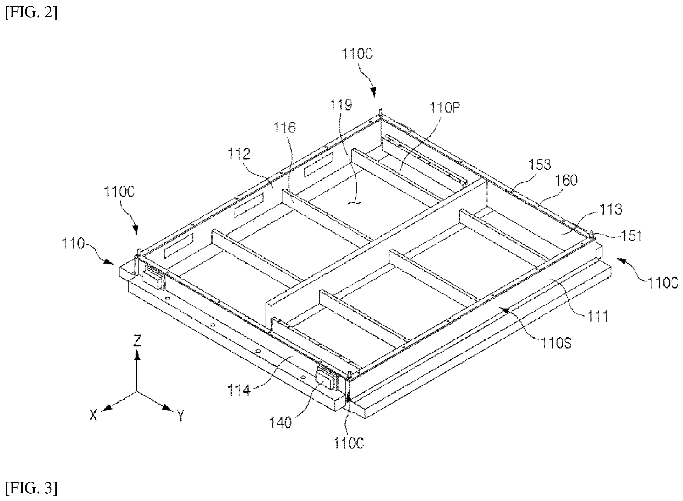

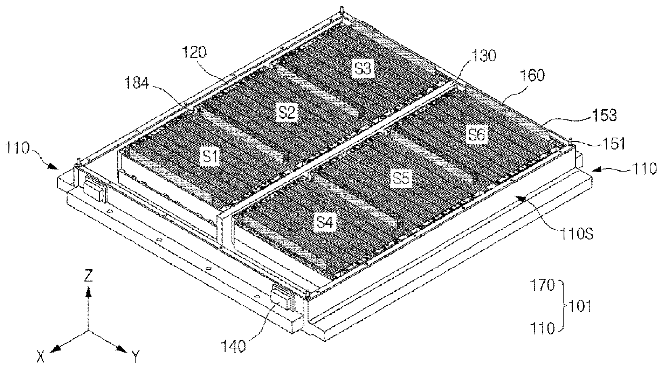

FIG. 2 is a perspective view of some components of the battery pack 100 according to example embodiments of the present invention.

FIGS. 1 and 2 illustrates that the battery pack 100 is defined in a vertical coordinate system defined by the first direction along an X-axis, the second direction along a Y-axis, and the third direction along a Z-axis that are perpendicular to one another but the first, second and third directions are not particularly limited as long as they are relatively perpendicular to one another.

Referring to FIGS. 1 and 2, the battery pack 100 may include a lower case 110, battery cells 120, a center beam 130, a cross-beam 116, a plurality of exhaust devices 140, a plurality of first buried guides 151, a plurality of second buried guides 153, a gasket 160, and an upper case 170. The battery pack 100 is a final form of a battery system mounted on a mobility or the like.

A pack case 101 corresponding to a housing of the battery pack 100 may include the lower case 110 and the upper case 170.

The lower case 110 may provide an inner space 119 for mounting a plurality of battery cells 120 therein. In some embodiments, the lower case 110 may include a plate part 110P and a side wall 110S. Two directions substantially parallel to the plate part 110P will be defined as a first direction (e.g., an X-axis direction) and a second direction (e.g., a Y-axis direction), and a direction substantially perpendicular to the plate part 110P of the lower case 110 will be defined as a third direction (e.g., a Z-axis direction). The X-axis direction, the Y-axis direction, and the Z-axis direction may be substantially perpendicular to one another. Unless otherwise mentioned, the definition of directions will apply to the following drawings.

The plurality of battery cells 120 may be on the plate part 110P of the lower case 110. The plate part 110P may support the plurality of battery cells 120. The plate part 110P may include an upper surface and a lower surface that are substantially parallel to each other. The upper surface of the plate part 110P may face the plurality of battery cells 120. The lower surface of the plate part 110P is opposite to the upper surface of the plate part 110P.

The side wall 110S may horizontally surround the plurality of battery cells 120. The side wall 110S may protect the plurality of battery cells 120 laterally. The side wall 110S may include a first side wall 111, a second side wall 112, a third side wall 113, and a fourth side wall 114. The first to fourth side walls 111, 112, 113, and 114 may be fixed to one another by a method such as friction stir welding or spot welding but are not particularly limited.

The first and second side walls 111 and 112 may be substantially perpendicular to the second direction (e.g., the Y-axis direction). Each of the third and fourth side walls 113 and 114 may be substantially perpendicular to the first direction (e.g., the X-axis direction). In some embodiments, the first and second side walls 111 and 112 may cover side surfaces of the plate part 110P. In some embodiments, the third and fourth side walls 113 and 114 may be on the plate part 110P.

In some embodiments, the first to fourth side walls 111, 112, 113, and 114 may be provided by an extrusion process. According to example embodiments, the first to fourth side walls 111, 112, 113, and 114 may each include an internal empty space, thus reducing the weight of the side wall 110S. According to example embodiments, the empty space of each of the first to fourth side walls 111, 112, 113, and 114 may be a venting path of a gas or a channel of a refrigerant.

Hereinafter, the technical idea of the present invention will be described with reference to an embodiment in which each of the plurality of battery cells 120 does not include a module frame. However, the above description is intended to provide only a non-limiting example and thus should not be understood as limiting the technical idea of the present invention in any sense. Based on the above description, those of ordinary skill in the art will be able to easily derive a battery pack employing battery modules including module frames each exposing one edge of one of the battery cells.

The center beam 130 may isolate elements mounted on the lower case 110 from each other. Accordingly, the center beam 130 may prevent an undesired short circuit from occurring between the plurality of battery cells 120 while protecting the plurality of battery cells 120.

The center beam 130 may extend between the third and fourth side walls 113 and 114. The center beam 130 may extend in the first direction (e.g., the X-axis direction). The center beam 130 may be in contact with the third side wall 113 and the fourth side wall 114. The center beam 130 may isolate the plurality of battery cells 120 from each other. The center beam 130 may be interposed between the plurality of battery cells 120. In some embodiments, the center beam 130 may divide the internal space 119 into two regions in the second direction (e.g., the Y-axis direction).

In some embodiments, the cross-beam 116 may be provided to divide the inner space 119 into two or more regions in the first direction (e.g., the X-axis direction). The cross-beam 116 may further isolate the elements isolated by the center beam 130.

Some cross-beams 116 may extend in the second direction (e.g., the Y-axis direction) between the center beam 130 and the first side wall 111. Some cross-beams 116 may extend in the second direction (e.g., the Y-axis direction) between the center beam 130 and the second side wall 112. In some embodiments, the cross-beam 116 may be provided to define a space for accommodation of one battery cell stack or a group of battery cells.

An arrangement of the center beam 130, the cross-beam 116, and the plurality of battery cells 120 shown in FIG. 1 is a non-limiting example and does not limit the technical idea of the present invention in any sense. A battery pack that includes various arrangements and numbers of a center beam and battery cells will be easily derived by those of ordinary skill in the art, based on the above description.

The plurality of exhaust devices 140 may be coupled to the fourth side wall 114. The fourth side wall 114 may include a plurality of exhaust holes connected to the plurality of exhaust devices 140. The plurality of exhaust holes may be configured to provide a path in which a gas and heat are discharged from the inside of the battery pack 100.

The plurality of exhaust devices 140 may be configured to delay thermal propagation by discharging a high-temperature gas from the inside of the battery pack 100 to the outside when at least one of the plurality of battery cells 120 is in a thermal runaway state.

Here, the thermal runaway state of the plurality of battery cells 120 is a state in which a change of temperature of the plurality of battery cells 120 accelerates the change of temperature, i.e., an uncontrollable positive feedback. The temperature of the plurality of battery cells 120 that are in the thermal runaway state may sharply increase and a large amount of a high-pressure gas and combustion debris may be discharged.

The plurality of first buried guides 151 may be on the side wall 110S. The plurality of first buried guides 151 may be on corners 110C of an upper surface of the side wall 110S. The plurality of first buried guides 151 may be coupled to the corners 110C of the upper surface of the side wall 110S. The plurality of first buried guides 151 may be partially buried in the side wall 110S. The plurality of first buried guides 151 may partially protrude from the side wall 110S.

The plurality of second buried guides 153 may be on the side wall 110S. The plurality of second buried guides 153 may be on the upper surface of the side wall 110S. The plurality of second buried guides 153 may be interposed between the corners 110C of the side wall 110S. The plurality of second buried guides 153 may be interposed between the plurality of first buried guides 151. The plurality of second buried guides 153 may be coupled to the upper surface of the side wall 110S. The plurality of second buried guides 153 may be partially buried in the side wall 110S. The plurality of second buried guides 153 may partially protrude from the side wall 110S.

Each of the first and second buried guides 151 and 153 may include a metal material. Each of the first and second buried guides 151 and 153 may include, for example, aluminum. Each of the first and second buried guides 151 and 153 may include, for example, steel such as carbon steel, nickel steel, chromium steel, nickel chromium steel, or manganese steel.

The battery pack 100 may further include electronic components. In some embodiments, the electronic components may be mounted on the lower case 110. In some embodiments, the electronic components may be disposed between the fourth side wall 114 on which the exhaust devices 140 are installed and the plurality of battery cells 120. In some embodiments, the electronic components may include an electronic device required to drive the battery pack 100.

In some embodiments, the electronic components may include, for example, a battery management system (BMS). The BMS may be configured to monitor, balance, and control the battery pack 100. In some embodiments, the monitoring of the battery pack 100 may include measuring a voltage and current of a certain battery cell 120 among the plurality of battery cells 120 and measuring temperatures at set positions in the battery pack 100. In some embodiments, the battery pack 100 may include measuring devices for measuring voltages, currents, and temperatures as described above.

The balancing of the battery pack 100 is an operation of reducing a deviation between the plurality of battery cells 120. The controlling of the battery pack 100 includes preventing overcharging, over-discharging, and overcurrent. Through monitoring, balancing, and controlling, the battery pack 100 may be operated under optimal conditions, thereby preventing a reduction of or reducing the lifespan of each of the plurality of battery cells 120.

The electronic components may further include a cooling device, a power relay assembly (PRA), a safety plug, etc. The cooling device may include a cooling fan. The cooling fan may circulate air in the battery pack 100 to prevent overheating of each of the plurality of battery cells 120. The PRA may be configured to supply or cut off power from a high-voltage battery to an external load (e.g., a motor of a vehicle). The PRA may cut off power supply to an external load (e.g., a motor of a vehicle) to protect the plurality of battery cells 120 and the external load (e.g., a motor of a vehicle), when abnormal voltage such as voltage surge occurs.

The battery pack 100 may further include a plurality of bus bars configured to electrically connect the plurality of battery cells 120. The plurality of battery cells 120 may be connected in series and/or in parallel by the plurality of bus bars. Accordingly, the battery pack 100 may be configured to output a high voltage to an external load (e.g., a motor of a vehicle).

The gasket 160 may include a material having elasticity in response to pressure applied thereto. The gasket 160 may include rubber synthesized from a material such as ethylenepropylene diene monomer (EPDM). When the lower case 110 and the upper case 170 are coupled to each other, the gasket 160 may be interposed between the lower case 110 and the upper case 170. The lower case 110 and the upper case 170 may press the gasket 160 to cause the gasket 160 to deform to some extent. Accordingly, the battery pack 100 may be sealed, and an inner space of the battery pack 100 may be blocked from an external fluid.

The upper case 170 may be coupled to the lower case 110. In some embodiments, the upper case 170 may include a main surface and an edge part. The main surface may cover elements, such as the plurality of battery cells 120 and electronic components, which are mounted on the battery pack 100. The edge part is a surface that is in contact with the lower case 110. In some embodiments, the upper case 170 may have a flat plate shape, and in this case, the edge part may horizontally surround the main surface. In some embodiments, the main surface may be elevated compared to the edge part, and the edge part and the main surface may be connected by a bent portion.

In some embodiments, the upper case 170 may be coupled to the side wall 110S of the lower case 110 through the first and second buried guides 151 and 153. According to example embodiments, the battery pack 100 may further include elements coupled to the first and second buried guides 151 and 153 to fix the upper case 170 to the side wall 110S of the lower case 110. The elements may include bolts and nuts but are not limited thereto.

FIG. 3 is an enlarged perspective view illustrating a state in which battery cells 120 are mounted in the lower case according to an embodiment of the present invention.

Referring to FIG. 3, battery cell stacks S1, S2, ..., and S6 are provided in each region defined by each of the side walls 111, 112, 113, and 114 of the lower case 110, the center beam 130, and the cross-beam 116. Each of the battery cell stacks S1, S2, ... , and S6 includes a plurality of battery cells 120. Hereinafter, the term "battery cell stack" may be understood to simply mean a set of battery cells or an assembly in which a plurality of battery cells are accommodated in a certain frame.

In some embodiments, the battery cells 120 may be pouch type battery cells but the present invention is not limited thereto. In some embodiments, the battery cells 120 may be prismatic battery cells.

In some embodiments, the battery cells 120 include a thin plate-shaped body and may preferably have a structure of a pouch cell. The pouch cell may have a structure in which a positive electrode, a separator, and a negative electrode are alternately stacked to form an electrode assembly, and an electrode tab is drawn from at least one side of the electrode assembly and connected to a cell lead. The positive electrode and the negative electrode may be prepared by coating at least one surface of a current collector with a slurry such as an electrode active material, a binder resin, a conductive agent, or other additives. As the electrode active material, a general positive electrode active material such as a lithium-containing transition metal oxide may be used in the case of the positive electrode, and a general negative electrode active material, such as a lithium metal, a carbon material, a metal compound, or a mixture thereof that occludes and releases lithium ions, may be used in the case of the negative electrode. A general porous polymer film for use in a lithium secondary battery may be employed as the separator.

An electrolyte for a general lithium secondary battery may be employed as an electrolyte accommodated in a cover together with the electrode assembly. The cover is formed of a sheet material, and includes a receiving part for accommodating the electrode assembly. Preferably, the cover is formed by combining a first case and a second case that are formed by processing the sheet material into certain shapes. The sheet material of the cover has a multilayer structure, in which an outermost resin layer formed of an insulating material such as polyethylene terephthalate (PET) or nylon, a metal layer formed of aluminum to maintain mechanical strength and prevent the permeation of moisture and oxygen, and an inner resin layer that is formed of a polyolefin-based material with thermal adhesion and thus serves as a sealing material are stacked.

In the sheet material of the cover, an adhesive resin layer may be interposed between the inner resin layer and the metal layer and between the outermost resin layer and the metal layer as necessary. The adhesive resin layer is formed in a single layer or multiple layers for smooth adhesion between different types of materials, and as a material of the adhesive resin layer, a polyolefin-based resin may be generally used, a polyurethane resin may be used for smooth processing, or a mixture thereof may be used.

The plurality of battery cells 120 may be arranged in the first direction (e.g., the X-axis direction). In some embodiments, the first battery cell stack S1, the second battery cell stack S2, and the third battery cell stack S3 may be arranged in the first direction (e.g., the X-axis direction). In some embodiments, the fourth battery cell stack S4, the fifth battery cell stack S5, and the sixth battery cell stack S6 may be arranged in the first direction (e.g., the X-axis direction).

In some embodiments, the first battery cell stack S1 and the fourth battery cell stack S4 may be arranged in the second direction (e.g., the Y-axis direction). In some embodiments, the second battery cell stack S2 and the fifth battery cell stack S5 may be arranged in the second direction (e.g., the Y-axis direction). In some embodiments, the third battery cell stack S3 and the sixth battery cell stack S6 may be arranged in the second direction (e.g., the Y-axis direction).

Each of the battery cell stacks S1, S2, .. , and S6 is provided with a separation sheet 184 corresponding thereto. The separation sheet 184 may surround a bottom surface and a pair of side surfaces of each of the battery cell stacks S1, S2, .. , and S6 without interrupting electrical connection of the battery cells 120. In some embodiments, the separation sheet 184 may face the bottom surfaces of the battery cell stacks S1, S2, ... and S6.

The separation sheet 184 may extend in a horizontal direction over all or a part of the bottom surfaces of the battery cell stacks S1, S2, .. , and S6, and extend in an approximately vertical direction along the side surfaces of the battery cell stacks S1, S2, .. , and S6.

In some embodiments, the separation sheet 184 may extend over the bottom surfaces of the battery cell stacks S1, S2, ..., and S6 along the first direction (e.g., the X-axis direction) and/or the second direction (e.g., the Y-axis direction), folded at lateral ends of the battery cell stacks S1, S2, . , and S6, and thereafter extend along the side surfaces of the battery cell stacks S1, S2,.., and S6.

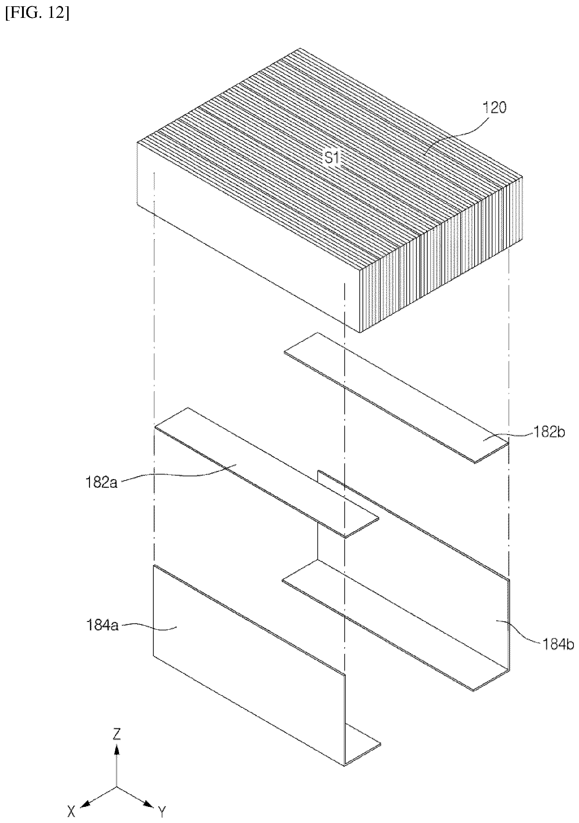

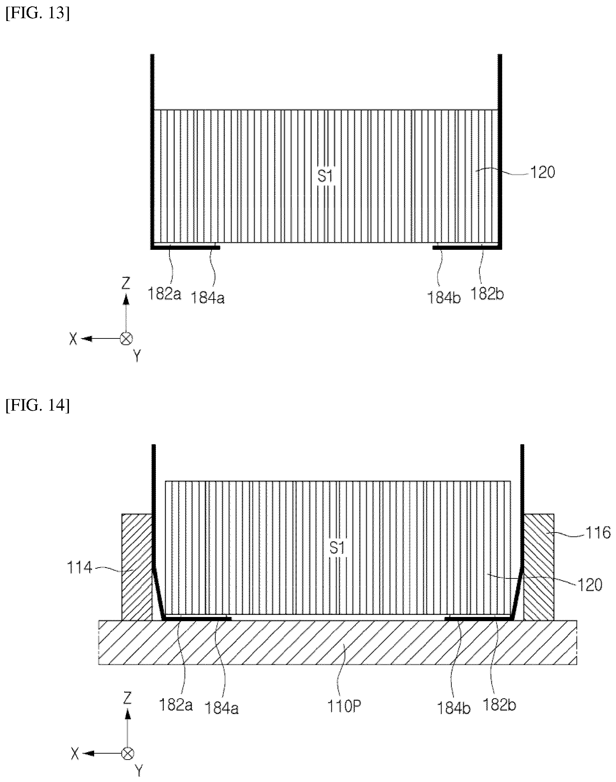

In some embodiments, the separation sheet 184 may include two separation sheets extending to opposite lateral ends of the bottom surfaces of the battery cell stacks S1, S2, .. , and S6 from the vicinity of the opposite lateral ends along the first direction (e.g., the X-axis direction) and/or the second direction (e.g., the Y-axis direction), and extending along the side surfaces of the battery cell stacks S1, S2, .., and S6. This configuration will be described in more detail with reference to FIGS. 12 and 13 below.

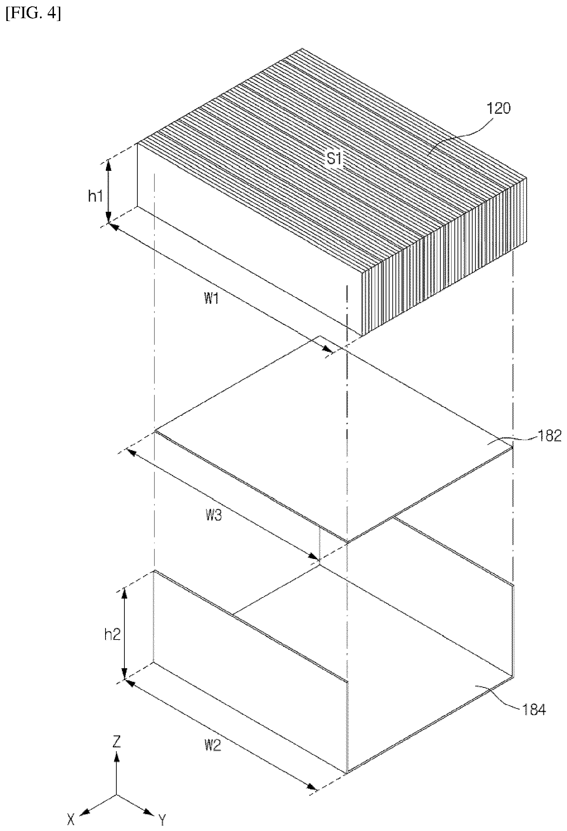

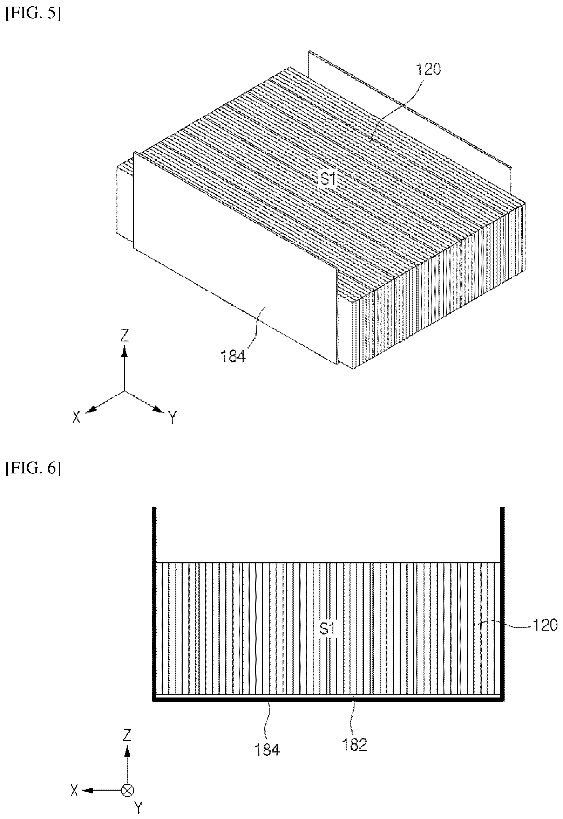

FIG. 4 is an exploded perspective view illustrating a state in which a bottom surface and a pair of side surfaces of the first battery cell stack S1 are surrounded by the separation sheet 184. FIG. 5 is a perspective view illustrating a state in which the bottom surface and the pair of side surfaces of the first battery cell stack S1 are surrounded by the separation sheet 184. Here, the separation sheet 184 is shown as surrounding the first battery cell stack S1 but technicians of ordinary skill in the art will understand that the second to sixth battery cell stacks S2, S3, ... and S6 may be also configured similarly.

Referring to FIGS. 4 and 5, the bottom surface of the first battery cell stack S1 including battery cells 120 stacked in the first direction (e.g., the X-axis direction) and a pair of side surfaces thereof perpendicular to the first direction (e.g., the X-axis direction) may face the separation sheet 184.

A material of the separation sheet 184 may be polyethylene terephthalate, polyvinyl chloride, polystyrene, polyethylene, polyethylene naphthalate, polybutylene terephthalate, polyacetal, polyamide, polyester sulfone, polyphenylene oxide, polyphenylene sulfide, polypropylene, or a copolymer thereof. However, the present invention is not limited thereto.

At least one surface of the separation sheet 184 may have adhesiveness. In some embodiments, the separation sheet 184 may be disposed such that an adhesive surface thereof faces the pack case 101. In some embodiments, the separation sheet 184 may be disposed such that the adhesive surface thereof faces the lower case 110. In some embodiments, the separation sheet 184 may be disposed such that the adhesive surface thereof faces the plate part 110P of the lower plate 110. The separation sheet 184 may be adhered to the plate part 110P due to the adhesiveness thereof when the separation sheet 184 is brought into contact with the plate part 110P. In some embodiments, both surfaces of the separation sheet 184 may have adhesiveness.

The separation sheet 184 may include an adhesive layer to provide adhesiveness to the separation sheet 184. The adhesive layer may be, but is not limited to, any material known in the art, e.g., an acrylic adhesive composition, an epoxy adhesive composition, a polyolefin adhesive composition, a polyamide adhesive composition, a polyurethane adhesive composition, an EVA adhesive composition, or the like.

A thermally conductive resin layer 182 may be provided between the separation sheet 184 and the bottom surface of the first battery cell stack S1. The thermally conductive resin layer 182 may include a thermally conductive resin, and more specifically, a thermally conductive adhesive material. In some embodiments, the thermally conductive resin may include at least one of a silicon-based resin, a urethane-based resin, or an acrylic resin. However, the present invention is not limited to thereto, and any thermally conductive resin known in the technical field to which the present invention pertains may be employed.

The thermally conductive resin is a liquid when applied but may be cured to fix the separation sheet 184 and the first battery cell stack S1 to each other. The thermally conductive resin has excellent thermal conductivity and thus quickly transfers heat generated in the battery cells 120 to the plate part 110P, thus preventing overheating of the battery pack 100.

In some embodiments, a width W2 of the separation sheet 184 in the second direction (e.g., the Y-axis direction) may be less than a width W1 of the first battery cell stack S1. A width W3 of the thermally conductive resin layer 182 in the second direction (e.g., the Y-axis direction) may be less than or equal to the width W2 of the separation sheet 184 in the second direction (e.g., the Y-axis direction).

Because the width W3 of the thermally conductive resin layer 182 in the second direction (e.g., the Y-axis direction) is less than or equal to the width W2 of the separation sheet 184 in the second direction (e.g., the Y-axis direction), the thermally conductive resin layer 182 may be provided only between the first battery cell stack S1 and the separation sheet 184. In other words, the thermally conductive resin layer 182 may be provided not to be in contact with the pack case 101. In some embodiments, one surface of the thermally conductive resin layer 182 may be in contact with the separation sheet 184, and another surface thereof may be in contact with the bottom surface of the first battery cell stack S1.

In some embodiments, when the separation sheet 184 is unfolded in the third direction (e.g., the Z-axis direction), a height h2 of the separation sheet 184 in the third direction (e.g., the Z-axis direction) may be greater than a height h1 of the first battery cell stack S1. As a result, as shown in FIG, an upper end of the separation sheet 184 may extend to be higher than an upper surface of each of the battery cell stacks S1, S2, ... and S6. However, the separation sheet 184 is formed of a flexible material and thus the upper end thereof in the battery pack 100 may be folded in parallel to the upper surfaces of the battery cell stacks S1, S2, ... and S6.

FIG. 6 is a side view illustrating a state in which the bottom surface and the pair of side surfaces of the first battery cell stack S1 are surrounded by the separation sheet 184.

Referring to FIG. 6, the bottom surface of the first battery cell stack S1 corresponds to one edge of each of the battery cells 120 included in the first battery cell stack S1. The bottom surface of the first battery cell stack S1 faces the separation sheet 184 with the thermally conductive resin 182 interposed therebetween.

The separation sheet 184 may be coupled to the thermally conductive resin layer 182 with first adhesive strength per unit area. The thermally conductive resin layer 182 is not in contact with the pack case 101, and second adhesive strength per unit area formed between the thermally conductive resin layer 182 and the pack case 101, when the thermally conductive resin layer 182 is adhered to the pack case 101, and particularly, the plate part 110P, which is the bottom surface of the lower case 110, is greater than the first adhesive strength. In other words, the first adhesive strength is less than the second adhesive strength generated in a virtual situation (i.e., a situation in which the thermally conductive resin layer 182 is adhered to the plate part 110P, which is the bottom surface of the lower case 110).

In some embodiments, the first adhesive strength may be in a range of about 15 gf/mm² to about 65 gf/mm² when measured according to the ASTM D3163 standard. In some embodiments, the second adhesive strength may be in a range of about 30 gf/mm² to about 90 gf/mm² when measured according to the ASTM D3163 standard. When the first adhesive strength is extremely high, it may not be easy to remove the separation sheet 184 when necessary. When the first adhesive strength is extremely low, strength with which the battery cells 120 are fixed to the battery pack 100 is insufficient and a cell lead may be damaged.

In some embodiments, the first adhesive strength may be about 10% to about 70% of the second adhesive strength. In some embodiments, the first adhesive strength may be in a range of about 10% to about 70%, a range of about 15% to about 65%, a range of about 20% to about 60%, a range of about 25% to about 55%, a range of about 30% to about 50%, a range of about 35% to about 45%, or a range between two of these numerical values.

The adhesive strength may be measured by, for example, a method, such as ASTM D950, ASTM D1876, ASTM D3163, ASTM D1002, ASTM D5868, ASTM D4541, ASTM D2295, ASTM D7234, ISO 1345, or ISO 4624.

As illustrated in FIG. 6, the separation sheet 184 may extend over the bottom surface of the first battery cell stack S1 in the first direction (e.g., the X-axis direction). Thereafter, the separation sheet 184 may extend along a side surface of the first battery cell stack S1 after being folded at a lateral end of the first battery cell stack S1. In some embodiments, the separation sheet 184 may extend in the third direction (e.g., the Z-axis direction) along the side surface of the first battery cell stack S1 from the lateral end of the first battery cell stack S1.

FIGS. 4 to 6 illustrate that the thermally conductive resin layer 182 is a continuous layer but the thermally conductive resin layer 182 may be a layer that is discontinuous in the horizontal direction.

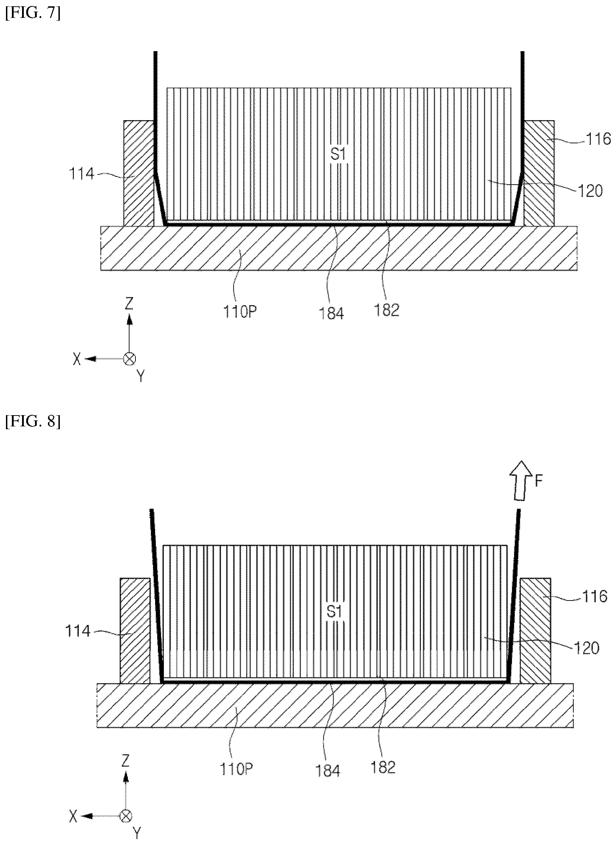

FIGS. 7 to 11 are conceptual views illustrating a method of removing a certain battery cell stack from a battery pack 100 according to embodiments of the present invention. The method of FIGS. 7 to 11 will be described with respect to a first battery cell stack S1 but it will be apparent to those of ordinary skill in the art that this method is also applicable to other battery cell stacks S2, S3, ..., and S6.

Referring to FIG. 7, the first battery cell stack S1 is positioned between the cross-beam 116 and a fourth side wall 114, and a separation sheet 184 and a thermally conductive resin layer 182 are provided as described above with reference to FIGS. 4 to 6.

The separation sheet 184 may be configured to be attachable to and detachable from the cross-beam 116 and the fourth side wall 114. As described above, at least one surface of the separation sheet 184 may be provided with an adhesive layer, and the separation sheet 184 may be disposed such that the adhesive layer faces a plate part 110P of a lower case. The adhesive layer may also be attached to the cross-beam 116 and the fourth side wall 114 and be detached from the cross-beam 116 and the fourth side wall 114 by applying a force to an end of the separation sheet 184 in an appropriate direction.

Referring to FIG. 8, a force F is applied to an end of the separation sheet 184 in a direction away from the plate part 110P. The force F is transferred to the separation sheet 184 attached to a bottom of the first battery cell stack S1 and thus a certain shear force is generated in a horizontal direction (i.e., a direction perpendicular to the third direction (e.g., the Z-axis direction).

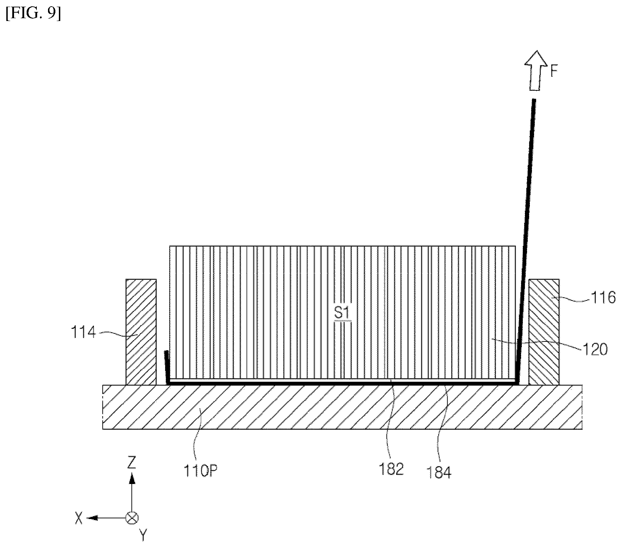

Referring to FIG. 9, when the force F is continuously applied, the shear force increases gradually, and when the shear force exceeds a specific critical point, the separation sheet 184 overcomes adhesive strength with respect to the thermally conductive resin layer 182 and adhesive strength with respect to the plate part 110P and begins to be drawn out to one side. That is, the separation sheet 184 begins to be drawn out in a direction (here, the X-axis direction) in which the shear force generated due to the force F applied to the end of the separation sheet 184 acts.

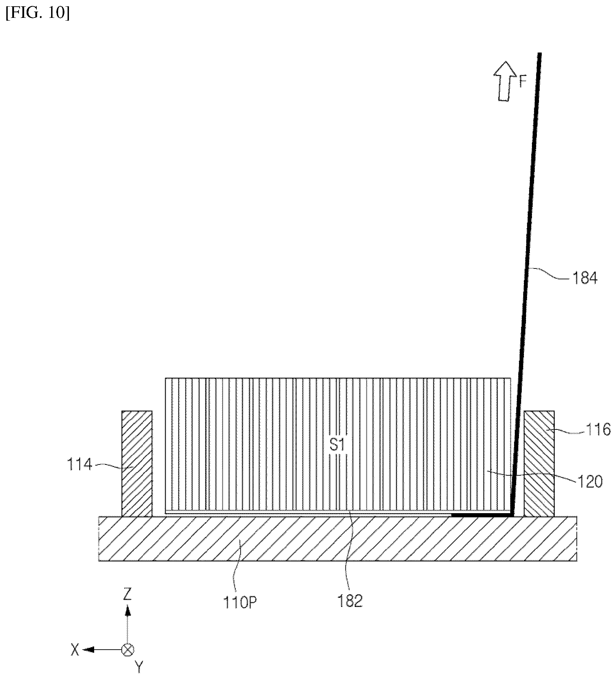

Referring to FIG. 10, once the separation sheet 184 begins to be drawn out, the separation sheet 184 may be continuously drawn out due to the force F that is continuously applied thereto, and finally, may be completely removed from a surface of the first battery cell stack S1.

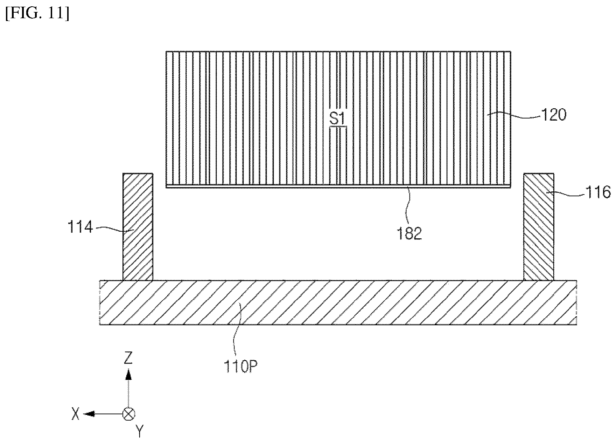

Referring to FIG. 11, the first battery cell stack S1 may be easily removed from the lower case 170 because the plate part 110P and the thermally conductive resin layer 182 are spaced apart from each other.

### (Second Embodiment)

FIG. 12 is an exploded perspective view illustrating a state in which a part of a bottom surface of and a pair of side surfaces of the first battery cell stack S1 are surrounded by a pair of separation sheets 184a and 184b according to another embodiment of the present invention. FIG. 13 is a side view illustrating a state in which the bottom surface and the pair of side surfaces of the first battery cell stack S1 are surrounded by the pair of separation sheets 184a and 184b.

Referring to FIGS. 12 and 13, in the present embodiment, a pair of separation sheets, i.e., a first separation sheet 184a and a second separation sheet 184b, are provided, whereas one separation sheet 184 is provided in the embodiment of FIG. 4.

The first separation sheet 184a may extend along a side surface of the first battery cell stack S1. The first separation sheet 184a may extend over at least an entire height of the first battery cell stack S1. Thereafter, the first separation sheet 184a may be folded from a lower end of one side surface of the first battery cell stack S1 and then extend by a certain length toward a center of a bottom surface of the first battery cell stack S1.

A first thermally conductive resin layer 182a may be provided between the bottom surface of the first battery cell stack S1 and the first separation sheet 184a. In some embodiments, the first thermally conductive resin layer 182a may be disposed only between the bottom surface of the first battery cell stack S1 and the first separation sheet 184a.

The second separation sheet 184b may extend along another side surface of the first battery cell stack S1. The other side surface is opposite to the one side surface. The second separation sheet 184b may extend over at least the entire height of the first battery cell stack S1. Thereafter, the second separation sheet 184b may be folded from a lower end of another side surface of the first battery cell stack S1 and then be extend by a certain length toward the center of the bottom surface of the first battery cell stack S1.

A second thermally conductive resin layer 182b may be provided between the bottom surface of the first battery cell stack S1 and the second separation sheet 184b. In some embodiments, the second thermally conductive resin layer 182a may be disposed only between the bottom surface of the first battery cell stack S1 and the second separation sheet 184b.

In some embodiments, no thermally conductive resin layer may be provided between the first separation sheet 184a and the second separation sheet 184b. In this case, the bottom surface of the first battery cell stack S1 between the first separation sheet 184a and the second separation sheet 184b may directly face the plate part 110P (see FIG. 2).

FIGS. 14 to 16 are conceptual views illustrating a method of removing a certain battery cell stack from a battery pack 100 according to other embodiments of the present invention. The method of FIGS. 14 to 16 will be described with respect to a first battery cell stack S1, but it will be apparent to those of ordinary skill in the art that this method is also applicable to other battery cell stacks S2, S3, . . ., and S6.

Referring to FIG. 14, the first battery cell stack S1 is positioned between the cross-beam 116 and a fourth side wall 114, and first and second separation sheets 184a and 184b and first and second thermally conductive resin layers 182a and 182b are provided as described above with reference to FIGS. 12 and 13.

Each of the first separation sheet 184a and the second separation sheet 184b may be configured to be attachable to and detachable from the fourth side wall 114 and the cross-beam 116. Each of the first separation sheet 184a and the second separation sheet 184b may include an adhesive layer on at least one surface thereof and be disposed such that the adhesive layer faces a plate part 110P of a lower case. The adhesive layer may be attached to the fourth side wall 114 and the cross-beam 116, and be detached from the fourth side wall 114 and the cross-beam 116 by applying a force in an appropriate direction to end portions of the first separation sheet 184a and the second separation sheet 184b.

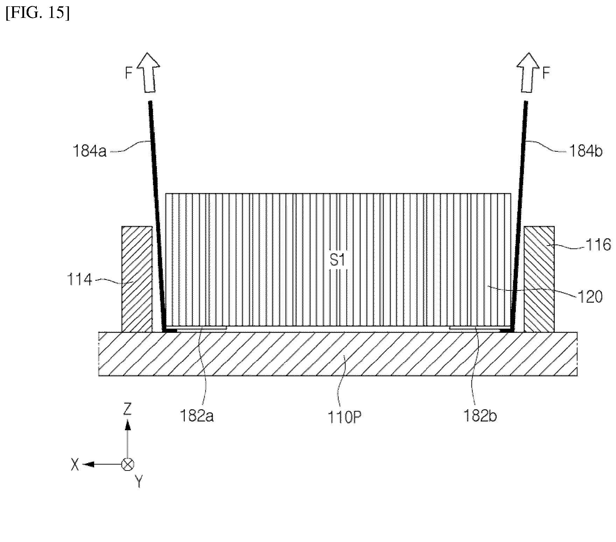

Referring to FIG. 15, a force F is applied to end portions of the first separation sheet 184a and the second separation sheet 184b in a direction away from the plate part 110P. The force F is transferred to the first separation sheet 184a and the second separation sheet 184b that are provided between a bottom part of the first battery cell stack S1 and the plate part 110P and thus a certain shear force is generated in a horizontal direction (i.e., a direction perpendicular to the third direction (e.g., the Z-axis direction).

When the force F is continuously applied, the shear force increases gradually, and when the shear force exceeds a specific critical point, the first separation sheet 184a and the second separation sheet 184b overcome adhesive strength with respect to the first and second thermally conductive resin layers 182a and 182b and adhesive strength with respect to the plate part 110P and begin to be drawn out to one side. That is, the first and second separation sheets 184a and 184b begin to be drawn out in a direction in which the shear force generated due to the force F applied to one end of each of the first separation sheet 184a and the second separation sheet 184b acts.

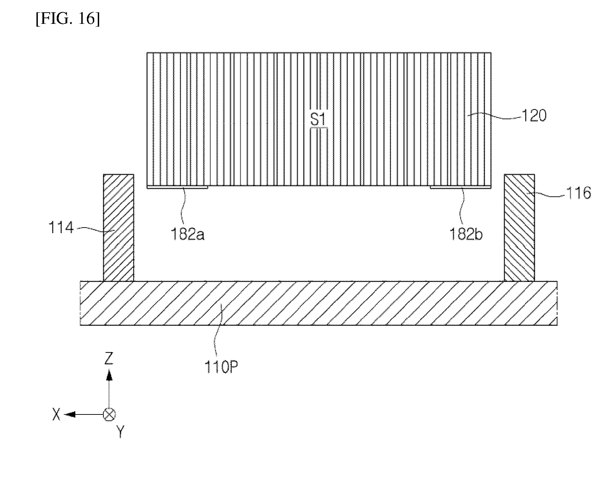

Referring to FIG. 16, the first separation sheet 184a and the second separation sheet 184b that begin to be drawn out may be continuously drawn out due to the force F continuously applied thereto, and be finally removed from a space between the bottom part of the first battery cell stack S1 and the plate part 110P.

The first and second thermally conductive resin layers 182a and 182b are spaced apart from the plate part 110P by a distance approximately corresponding to a thickness of the first and second separation sheets 184a and 184b, and thus, the first battery cell stack S1 or a certain battery cell 120 may be relatively easily removed from the lower case 110. In the battery pack 100 according to embodiments of the present invention, when a certain battery cell 120 is defective, only the defective battery cell 120 can be selectively and easily exchanged with another, thus greatly improving the convenience of maintenance.

### (Third Embodiment)

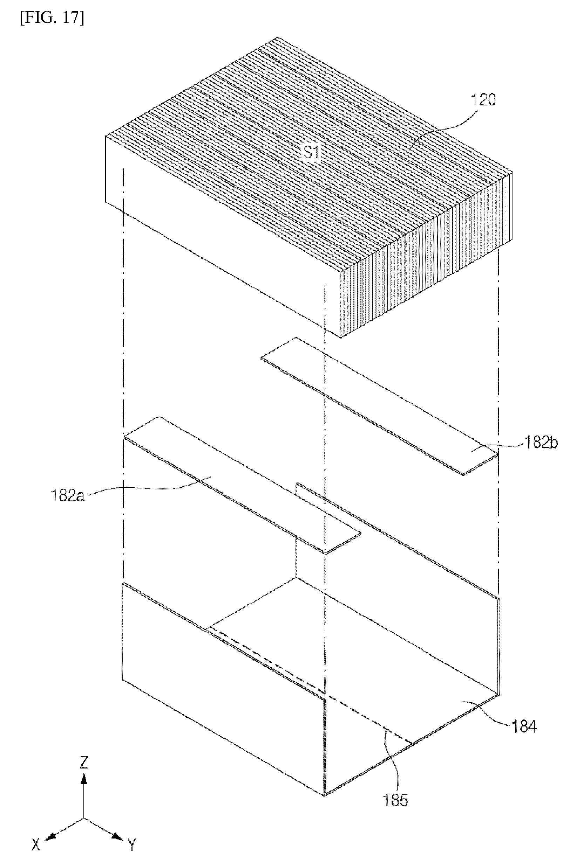

FIG. 17 is an exploded perspective view illustrating a state in which a bottom surface and a pair of side surfaces of the first battery cell stack S1 are surrounded by a separation sheet 184 according to another embodiment of the present invention.

The embodiment of FIG. 17 is different from the embodiments described above with reference to FIGS. 4 to 11 in that a perforated line 185 is formed on the separation sheet 184. Therefore, the present embodiment will be described focusing on the difference.

In some embodiments, the perforated line 185 may include cutout portions at certain intervals in a linear direction to pass through the separation sheet 184. In some embodiments, the perforated line185 may include intermittent or continuous cuts formed to a certain depth not to pass through the separation sheet 184.

The perforated line 185 may help the separation sheet 184 be easily broken when a shear force is applied in a direction perpendicular or diagonal to the perforated line 185. In particular, the separation sheet 184 may be broken along the perforated line 185. Since the separation sheet 184 is broken along the perforated line 185, predictability of positions on the separation sheet 184 to be broken may be increased, and a force F may be applied to two end portions of the separation sheet 184 to more quickly remove the separation sheet 184, similar to the embodiment described above with reference to FIGS. 12 to 16.

Thermally conductive resin layers 182a and 182b may be provided between the bottom surface of the first battery cell stack S1 and the separation sheet 184. In some embodiments, a first thermally conductive resin layer 182a may be provided at one side of the perforated line 185, and a second thermally conductive resin layer 182b may be provided at another side of the perforated line 185. In some embodiments, there may be no thermally conductive resin layer between the bottom surface of the first battery cell stack S1 and the perforated line 185.

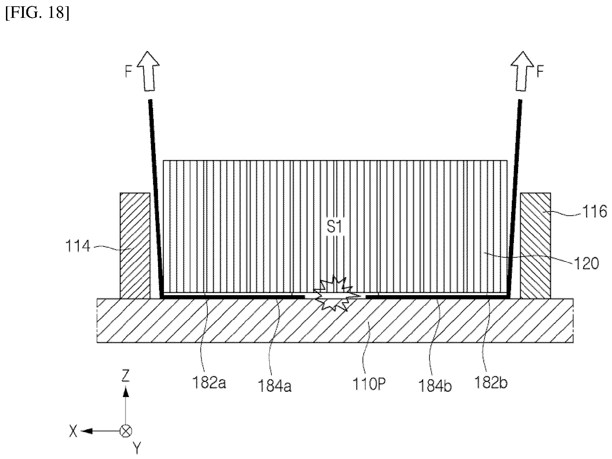

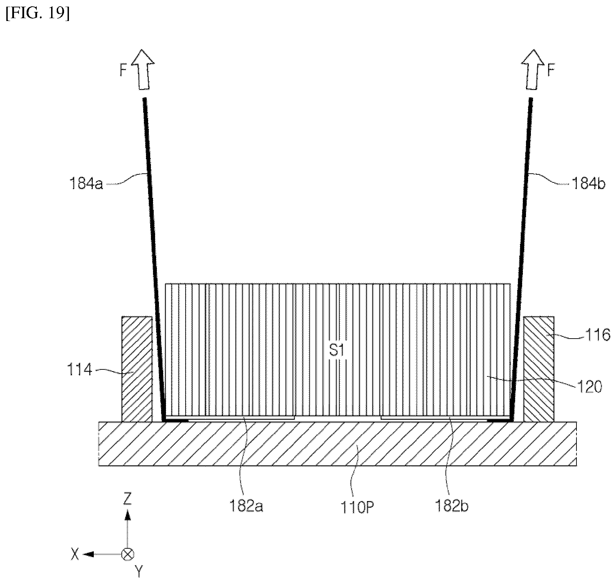

FIGS. 18 and 19 are conceptual views illustrating a method of removing a certain battery cell stack from a battery pack 100 according to another embodiment of the present invention.

Referring to FIGS. 17 and 18, when the force F is applied to opposite ends of the separation sheet 184, a horizontal shear force is applied to the separation sheet 184 between the bottom part of the first battery cell stack S1 and the plate part 110P. Thereafter, when the force F is continuously applied, the shear force may overcome adhesive strength with respect to the first and second thermally conductive resin layers 182a and 182b, overcome adhesive strength with respect to the plate part 110P, and breaking strength of the separation sheet 184 at the perforated line 185. Then, the separation sheet 184 is broken along the perforated line 185 into a first separation sheet 184a and a second separation sheet 184b, and the first separation sheet 184a and the second separation sheet 184b are drawn out along the bottom surface of the first battery cell stack S1.

Referring to FIG. 19, when the force F is continuously applied to end portions of the first separation sheet 184a and the second separation sheet 184b, the first separation sheet 184a and the second separation sheet 184b may be continuously drawn out, so that the separation sheet 184 may be finally removed from a space between the bottom part of the first battery cell stack S1 and the plate part 110P.

The first and second thermally conductive resin layers 182a and 182b are spaced apart from the plate part 110P by a distance approximately corresponding to a thickness of the separation sheet 184, and thus, the first battery cell stack S1 or a certain battery cell 120 may be relatively easily removed from the lower case 110. In the battery pack 100 according to embodiments of the present invention, when a certain battery cell 120 is defective, only the defective battery cell 120 can be selectively and easily exchanged with another, thus greatly improving the convenience of maintenance.

Although the embodiments of the present invention have been described above in detail, the present invention may be implemented in many different forms by those of ordinary skill in the art, to which the present invention pertains, without departing from the spirit and scope of the present invention defined in the appended claims. Therefore, it should be understood that all modifications in embodiments of the present invention fall within the scope of the present invention.

## Claims

1. A battery pack comprising:
a pack case including a lower case and an upper case, the lower case and the upper case defining an inner space;
a plurality of battery cells in the inner space;
a separation sheet between a bottom of the pack case and the plurality of battery cells; and
a thermally conductive resin layer between the separation sheet and the plurality of battery cells,
wherein the separation sheet is coupled to the thermally conductive resin layer, and
wherein a first adhesive strength per unit area between the separation sheet and the thermally conductive resin layer is lower than a second adhesive strength per unit area between the pack case and the thermally conductive resin layer.

2. The battery pack of claim 1, wherein the first adhesive strength per unit area is in a range of about 10% to about 70% of the second adhesive strength per unit area.

3. The battery pack of claim 1, wherein the thermally conductive resin layer is provided only between the separation sheet and the plurality of battery cells.

4. The battery pack of claim 3, wherein the thermally conductive resin layer is not in contact with the pack case.

5. The battery pack of claim 1, wherein the separation sheet has adhesive strength with respect to the pack case.

6. The battery pack of claim 1, wherein the plurality of battery cells comprise at least one battery cell stack,
wherein a bottom surface of the at least one battery cell stack facing the bottom of the pack case faces the separation sheet, and
wherein a width of the separation sheet is less than a width of the bottom surface of the at least one battery cell stack.

7. The battery pack of claim 6, wherein the separation sheet extends along a side surface of the at least one battery cell stack.

8. The battery pack of claim 6, wherein the separation sheet includes a perforated line crossing the separation sheet in a width direction of the separation sheet,
wherein the perforated line passes between the at least one battery cell stack and the bottom of the pack case.

9. The battery pack of claim 6, wherein the thermally conductive resin layer is provided only between the bottom surface of the at least one battery cell stack and the separation sheet.

10. The battery pack of claim 9, wherein a first surface of the thermally conductive resin layer is in contact with the separation sheet, and a second surface of the thermally conductive resin layer is in contact with the bottom surface of the at least one battery cell stack.

11. The battery pack of claim 1, wherein the plurality of battery cells comprise at least one battery cell stack,
wherein the separation sheet comprises a first separation sheet and a second separation sheet,
wherein the first separation sheet is positioned at a first end of the at least one battery cell stack and between the at least one battery cell stack and the bottom of the pack case, and
wherein the second separation sheet is spaced apart from the first separation sheet and is positioned at a second end of the at least one battery cell stack and between the at least one battery cell stack and the bottom of the pack case.

12. The battery pack of claim 11, wherein the at least one battery cell stack directly faces the bottom of the pack case between the first separation sheet and the second separation sheet.

13. A battery pack in a vertical coordinate system defined by a first direction, a second direction, and a third directions that are perpendicular to one another, the battery pack comprising:
a plurality of battery cells stacked in the first direction;
a pack case including a lower case, an upper case, and an inner space configured to accommodate the plurality of battery cells;
a separation sheet between a bottom of the pack case and the plurality of battery cells; and
a thermally conductive resin layer between the separation sheet and the plurality of battery cells,
wherein the separation sheet is configured to be separated from the thermally conductive resin layer when a shear force is applied to the thermally conductive resin layer.

14. The battery pack of claim 13, wherein the thermally conductive resin layer is not in contact with the pack case.

15. The battery pack of claim 14, wherein the lower case comprises a side wall extending along an edge of the lower case and a cross-beam extending from the side wall across the lower case, and
wherein the separation sheet is configured to be attachable to and detachable from at least one of the side wall and the cross-beam.
